# EUROPEAN PATENT APPLICATION

(11) **EP 2 690 317 A2**
(43) Date of publication of application: **29.01.2014**
(21) Application number: 13177927.4
(22) Date of filing: 25.07.2013
(51) Int. Cl.: F16H 55/56

(54) **Driven-side pulley**

(30) Priority: 26.07.2012 JP 2012166142
(71) Applicant: KANZAKI KOKYUKOKI MFG. CO., LTD., Amagasaki-shi, Hyogo 661-0981 (JP)
(72) Inventor: Tsukamoto, Michio, Hyogo, 661-0981 (JP); Inaoka, Takaya, Hyogo, 661-0981 (JP)
(74) Representative: Peckmann, Ralf

(57) **Abstract**

The present invention provides a driven-side pulley including a fixed sheave that is supported by a driven shaft so as to be relatively rotatable around an axis line and immovable along the axis line, a movable sheave that is supported by the driven shaft so as to be relatively rotatable around the axis line and movable along the axis line, a spider that is supported by the driven shaft so as to be relatively non-rotatable around the axis line and immovable along the axis line, and a biasing member that presses the movable sheave in such a direction as that the movable sheave comes closer to the fixed sheave, the driven-side pulley further including a main torquecam mechanism that presses the movable sheave in the axis line in accordance with a relative difference in a rotational angle between the spider and the movable sheave, and a sub torque-cam mechanism that presses the movable sheave in the axis line in accordance with a relative difference in a rotational angle between the fixed sheave and the movable sheave.

## Description

### BACKGROUND OF THE INVENTION

### Field of the Invention

The present invention relates to a driven-side pulley supported by a driven shaft so as to form a belt-type continuously variable transmission in cooperation with a driving-side pulley that is supported by a driving shaft in such a manner as that an effective diameter of the driving-side pulley varies in accordance with a change of a rotational speed of the driving shaft.

### Related Art

There has been previously proposed a belt-type continuously variable transmission (see, for example, Japanese examined utility model application publication No. H05-040354, which is hereinafter referred to as Patent Document 1) including a driving-side pulley supported by a driving shaft, a driven-side pulley supported by a driven shaft, a belt such as a V-belt wounded between the both pulleys, wherein a speed of a rotational power that is transmitted to the driven shaft varies in accordance with a rotational speed of the driving shaft and a rotational resistance of the driven shaft.

To explain in detail, the driving-side pulley includes a driving-side fixed sheave supported by the driving shaft in an immovable manner along an axis line of the driving shaft, and a driving-side movable sheave supported by the driving shaft in a movable manner along the axis line of the driving shaft, wherein the driving-side movable sheave is provided with a weight roller that generates a centrifugal force corresponding to the rotational speed of the driving shaft.

As the rotational speed of the driving shaft increases, the driving-side movable sheave is pressed by the weight roller in such a direction as that the driving-side movable sheave comes closer to the driving-side fixed sheave. As a result, the effective diameter of the driving-side pulley increases, whereby the speed of the rotational power that has been transmitted to the driven shaft increases (upshift operation).

On the other hand, the driven-side pulley includes a driven-side fixed sheave supported by the driven shaft in a relatively non-rotatable manner around an axis line with respect thereto and in an immovable manner along the axis line thereof, a driven-side movable sheave supported by the driven shaft in a relatively rotatable manner around the axis line with respect thereto and in a movable manner along the axis line thereof, and a spider supported by the driven shaft in a relatively non-rotatable manner around the axis line with respect thereto and in an immovable manner along the axis line thereof.

A cam member is fixed to the spider, and the driven-side movable sheave is formed with a cam groove into which the cam member is engaged.
The cam groove includes a driving-side ahead-rotating engagement surface with which the cam member is engaged when the movable sheave rotates ahead of the spider, and a driven-side ahead-rotating engagement surface with which the cam member is engaged when the spider rotates ahead of the movable sheave.

The driving-side ahead-rotating engagement surface is inclined so as to engage with the cam member when the movable sheave rotates ahead of the spider to generate a force for pressing the driven-side movable sheave in such a downshift direction as to cause the driven-side movable sheave to come closer to the driven-side fixed sheave.

The driven-side ahead-rotating engagement surface is inclined so as to engage with the cam member when the spider rotates ahead of the movable sheave to generate a force for pressing the driven-side movable sheave in such a downshift direction as to cause the driven-side movable sheave to come closer to the driven-side fixed sheave.

The thus configured driven-side pulley can achieve following effects.
In a case of high-speed power transmitting condition in which the driven-side movable sheave is away from the driven-side fixed sheave so that the effective diameter of the driven-side pulley becomes small, when a traveling load of a driving wheel increases such as when the vehicle comes to a rise in the road, the movable sheave rotates ahead of the spider so that the driven-side movable sheave is pressed in the downshift direction by a cam function caused by the driving-side ahead-rotating engagement surface and the cam member.
Accordingly, as the traveling load of the driving wheel increases, the high-speed power transmitting condition is automatically shifted to a low-speed power transmitting condition, that is, a high-torque power transmitting condition.

Further, in a case where an engine brake function is needed such as when the vehicle travels on a downhill slope without increasing rotational speed of an engine output, the spider rotates ahead of the movable sheave so that the driven-side movable sheave is pressed in the downshift direction by a cam function caused by the driven-side ahead-rotating engagement surface and the cam member.
Accordingly, when the engine brake function is needed, the high-speed power transmitting condition is automatically shifted to the low-speed traveling state so as to realize the sufficient engine brake function.

As described above, the belt-type continuously variable transmission disclosed by the Patent Document 1 is useful in that it can achieve a speed-change operation by the driven-side pulley in accordance with the relative difference in the rotational angle between the driving side and the driven side, in addition to a speed-change operation by the driving-side pulley in accordance with the change in the rotational speed of the driving shaft.

However, in the belt-type continuously variable transmission disclosed by the Patent Document 1, the force that is required to realize the speed-change operation by the driven-side pulley, that is, the force that causes the driven-side movable pulley to come close to and separate from the driven-side fixed pulley is obtained only by the engagement of the cam member provided at the spider and the cam groove formed in the driven-side movable sheave.

Therefore, a moving speed of the driven-side movable sheave along the axis line that corresponds to the relative difference in the rotational angle between the driven-side movable sheave and the spider is defined only by an inclined angle of the driving-side ahead-rotating engagement surface (or the driven-side ahead-rotating engagement surface).

It is thus problematic in that it is difficult to change the moving speed of the driven-side movable sheave along the axis line with respect to the relative difference in the rotational angle between the driven-side movable sheave and the spider.

### SUMMARY OF THE INVENTION

In view of the prior art, it is an object of the present invention to provide a driven-side pulley that forms a belt-type continuously variable transmission in cooperation with a driving-side pulley provided at a driving shaft so that an effective diameter of the driving-side pulley varies in accordance with a rotational speed of the driving shaft, the driven-side pulley including a spider, a movable sheave and a fixed sheave, and configured so that the movable sheave is moved in the axis line in accordance with a relative difference in a rotational angle between the spider and the movable sheave, wherein a movement speed of the movable sheave in the axis line can be easily varied.

In order to achieve the object, the present invention provides a driven-side pulley supported by a driven shaft so as to perform a continuously variable transmission between a driving shaft and the driven shaft in cooperation with a driving-side pulley supported by the driving shaft so that an effective diameter of the driving-side pulley varies in accordance with a rotational speed of the driving shaft, the driven-side pulley including a fixed sheave that includes a conical fixed-side belt sandwiching surface and is supported by the driven shaft in a relatively rotatable manner around an axis line with respect thereto and in an immovable manner along the axis line, a movable sheave that includes a conical movable-side belt sandwiching surface sandwiching a belt in cooperation with the fixed-side belt sandwiching surface and is supported by the driven shaft in a relatively rotatable manner around the axis line with respect thereto and in a movable manner along the axis line, a spider that is supported by the driven shaft in a relatively non-rotatable manner around the axis line with respect thereto and in an immovable manner along the axis line, a biasing member that presses the movable sheave in such a direction as that the movable-side belt sandwiching surface comes closer to the fixed-side belt sandwiching surface, a main torque-cam mechanism (200) that presses the movable sheave in the axis line in accordance with a difference in a rotational angle between the spider and the movable sheave, and a sub torque-cam mechanism that presses the movable sheave in the axis line in accordance with a difference in a rotational angle between the fixed sheave and the movable sheave.

The driven-side pulley according to the present invention includes the sub torque-cam mechanism that presses the movable sheave in the axis line in accordance with a relative difference in a rotational angle between the fixed sheave and the movable sheave, in addition to the main torque-cam mechanism that presses the movable sheave in the axis line in accordance with a relative difference in a rotational angle between the spider and the movable sheave.
The thus configured driven-side pulley makes it possible to easily change the movement speed of the movable sheave along the axis line, thereby adjusting the sensitivity in downshift operation and upshift operation according to user's desire.

That is, the sub torque-cam mechanism may be formed so that a pressing direction in which the sub torque-cam mechanism presses the movable sheave is same as a pressing direction in which the main torque-cam mechanism presses the movable sheave. The configuration makes it possible to increase the movement speed of the movable sheave toward one side in the axis line (for example, toward the downshift direction) (in this case, the movement speed of the movable sheave toward the upshift direction is reduced).

Alternatively, the sub torque-cam mechanism may be also formed so that the pressing direction in which the sub torque-cam mechanism presses the movable sheave is opposite the pressing direction in which the main torque-cam mechanism presses the movable sheave. The alternative configuration makes it possible to decrease the movement speed of the movable sheave toward one side in the axis line (for example, toward the downshift direction) (in this case, the movement speed of the movable sheave toward the upshift direction is increased).

Preferably, the main torque-cam mechanism may include a main cam member provided at the spider and a main cam groove provided at the movable sheave in such a manner as that the main cam member is engaged therein.

The main cam groove includes a main driving-side ahead-rotating engagement surface with which the main cam member is engaged at a driving-side ahead-rotating time when the movable sheave rotates ahead of the spider, and a main driven-side ahead-rotating engagement surface with which the main cam member is engaged at a driven-side ahead-rotating time when the spider rotates ahead of the movable sheave.
The main driving-side ahead-rotating engagement surface and the main driven-side ahead-rotating engagement surface are separated in a circumferential direction from each other by such a distance as that the main cam member is selectively engaged with either one of the both engagement surfaces.

The main driving-side ahead-rotating engagement surface includes a cam region inclined to the axis line direction in such a manner as to generate a pressing force for pressing the movable sheave toward a downshift direction in which the movable sheave comes closer to the fixed sheave at the driving-side ahead-rotating time.

Preferably, the sub torque-cam mechanism may include a sub cam member provided at the movable sheave and a sub cam groove provided at the fixed sheave in such a manner as that the sub cam member is engaged therein.

The sub cam groove includes a sub driving-side ahead-rotating engagement surface with which the sub cam member is engaged to generate a pressing force for pressing the movable sheave in the axis line at a driving-side ahead-rotating time when the fixed sheave rotates ahead of the movable sheave that is connected to the spider through the main torque-cam mechanism, and a sub driven-side ahead-rotating engagement surface with which the sub cam member is engaged to generate a pressing force for pressing the movable sheave in the axis line at a driven-side ahead-rotating time when the movable sheave rotates ahead of the fixed sheave.
The sub driving-side ahead-rotating engagement surface and the sub driven-side ahead-rotating engagement surface are separated in a circumferential direction from each other by such a distance as that the sub cam member is selectively engaged with either one of the both engagement surfaces.

In a first embodiment, the sub driving-side ahead-rotating engagement surface includes a cam region inclined to the axis line direction in such a manner as to generate a pressing force for pressing the movable sheave toward the downshift direction at the driving-side ahead-rotating time.

In a second embodiment, the sub driving-side ahead-rotating engagement surface includes a cam region inclined to the axis line direction in such a manner as to generate a pressing force for pressing the movable sheave toward the upshift direction at the driving-side ahead-rotating time.

In any one of the embodiments, the sub driven-side ahead-rotating engagement surface may include a cam region inclined to the axis line direction in such a manner as to generate a pressing force for pressing the movable sheave toward the downshift direction at the driven-side ahead-rotating time.

Alternatively, the sub driven-side ahead-rotating engagement surface may include a cam region inclined to the axis line direction in such a manner as to generate a pressing force for pressing the movable sheave toward the upshift direction in which the movable sheave comes away from the fixed sheave at the driven-side ahead-rotating time.

In any one of the various configurations, the sub cam groove may include first and second sub cam grooves that are different in terms of shape from each other and are arranged in a displacement manner in a circumferential direction to each other.
In this case, the fixed sheave can be mounted to the driven shaft at a first mounting position that causes the sub cam member to be inserted into the first sub cam groove and also at a second mounting position that causes the sub cam member to be inserted into the second sub cam groove.

### BRIEF DESCRIPTION OF THE DRAWINGS

The above, and other objects, features and advantages of the present invention will become apparent from the detailed description thereof in conjunction with the accompanying drawings therein.
Fig. 1 is a schematic view of a traveling system power transmitting path to which a belt-type continuously variable transmission inclusive of a driven-side pulley according to one embodiment of the present invention is applied.
Fig. 2 is a vertical cross-section of the driven-side pulley and shows a high-speed power transmitting condition.
Fig. 3 is a vertical cross-section of the driven-side pulley and shows a low-speed power transmitting condition.
Figs. 4A and 4B are side views of the driven-side pulley, viewed along an arrow IV in Figs. 2 and 3, and show states in which a movable sheave is positioned at a maximum speed position and a minimum speed position, respectively.
Figs. 5A and 5B are side views of the driven-side pulley, viewed along an arrow V in Figs. 2 and 3, and show states in which the movable sheave is positioned at the maximum speed position and the minimum speed position, respectively.
Fig. 6 is a plane view of the driven-side pulley.
Fig. 7 is a perspective view of a fixed sheave of the driven-side pulley.
Figs. 8A and 8B are cross sectional views taken along lines VIII(a)-VIII(a) and VIII(b)-VIII(b) in Fig. 6, respectively.

### DETAILED DESCRIPTION OF THE PREFERRED EMBODIMENTS

Hereinafter, one embodiment of a driven-side pulley according to the present invention will be explained, with reference to the attached drawings.

The driven-side pulley 100 forms a belt-type continuously variable transmission 10 in cooperation with a driving-side pulley 20 and a belt 10 such as a V-belt
The belt-type continuously variable transmission 10 is interposed in a traveling system power transmitting path extending from a driving power source 50 such as an engine to a driving wheel 60, for example.

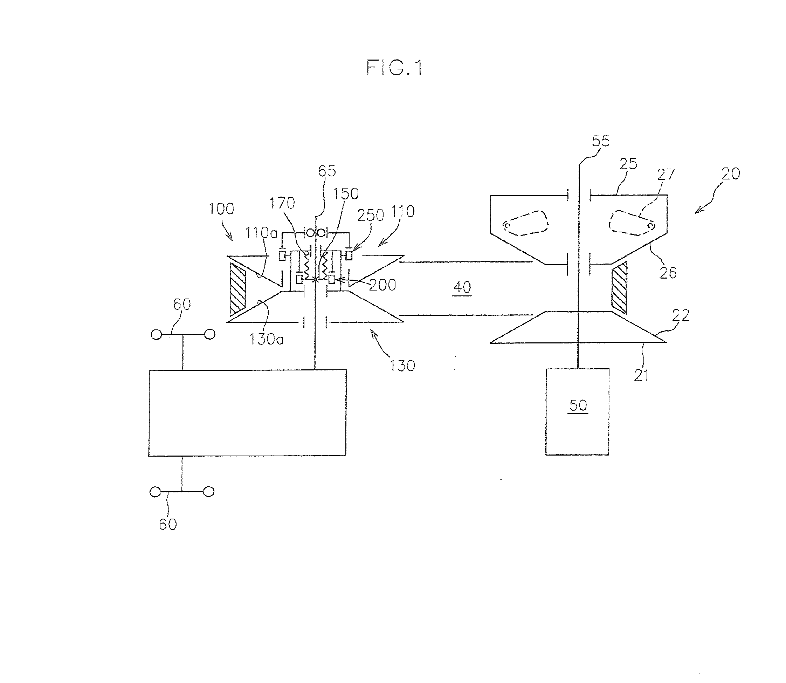

Fig. 1 is a schematic view of the traveling system power transmitting path to which the belt-type continuously variable transmission 10 is applied.
As shown in Fig. 1, the belt-type continuously variable transmission 10 performs a variable speed-change operation between a driving shaft 55 operatively connected to the driving power source 50 and a driven shaft 65 operatively connected to the driving wheel 60, and includes the driving-side pulley 50 supported by the driving shaft 55, the driven-side pulley 100 supported by the driven shaft 65 and the belt 40 wound around the driving-side pulley 50 and the driven-side pulley 100.

The driving-side pulley 20 is configured so that an effective diameter thereof, which is a distance from an axial center of the corresponding driving shaft 55 to a position on which the belt 40 runs in the driving-side pulley 20, varies in accordance with a rotational speed of the driving shaft 55.
More specifically, the driving power source 50 is configured so that a rotational speed of a power output by the driving power source 50 varies in accordance with a manual operation or the like.

The driving-side pulley 20 includes a driving-side fixed sheave 21 and a driving-side movable sheave 25. The driving-side fixed sheave 21 has a conical fixed-side belt sandwiching surface 22 and is supported by the driving shaft 55 in an immovable manner along the axis line direction thereof. The driving-side movable sheave 25 has a conical movable-side belt sandwiching surface 26 that faces the fixed-side belt sandwiching surface 22 and is supported by the driving shaft 55 in a movable manner along the axis line direction thereof

The driving-side movable sheave 25 is provided with a weight member 27 that generates a centrifugal force having a magnitude corresponding to the rotational speed of the driving shaft 55. As the centrifugal force generated by the weight member 27 increases, the driving-side movable sheave 25 is moved in such an upshift direction as that the driving-side movable sheave 25 comes closer to the driving-side fixed sheave 21.

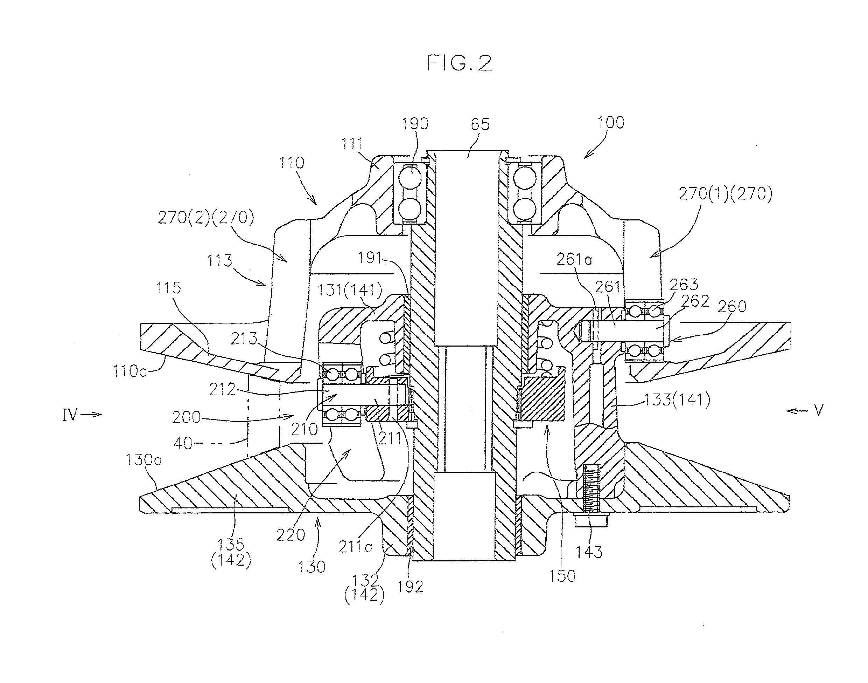

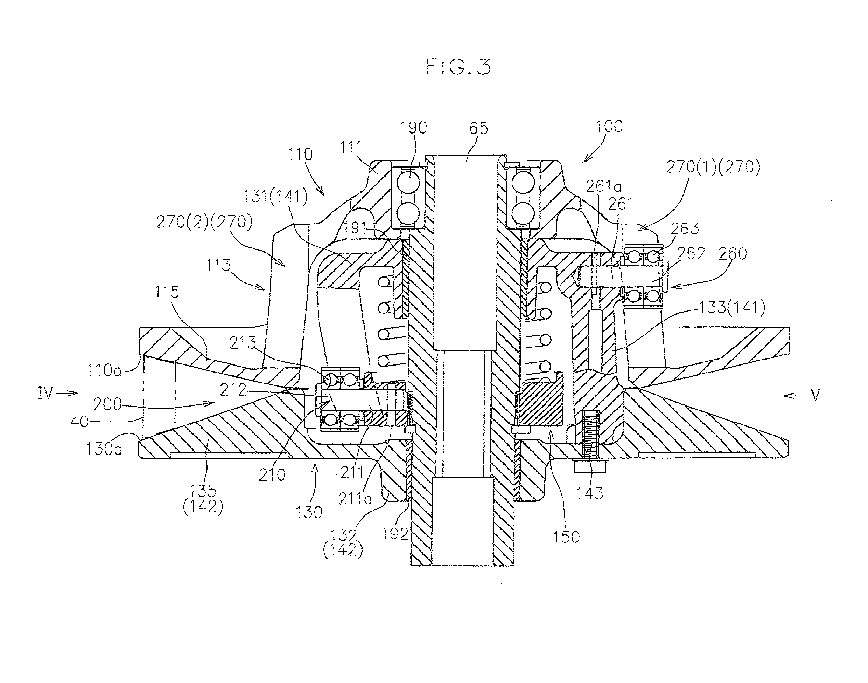

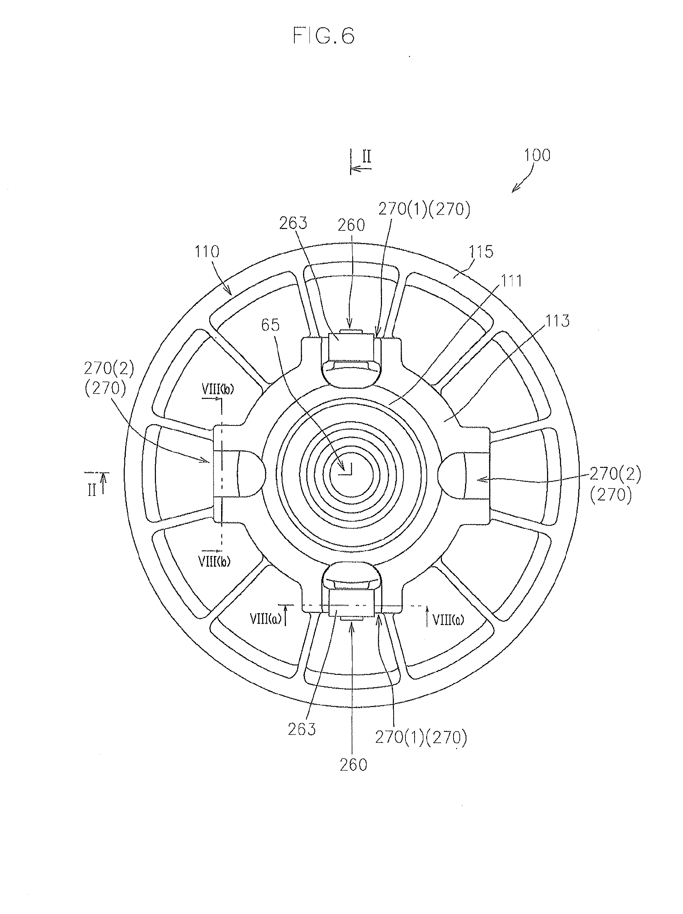

Figs. 2 and 3 are vertical cross-sections of the driven-side pulley 100 taken along line II-II in Fig. 6, which is mentioned later.
Figs. 2 and 3 show a high-speed power transmitting condition and a low-speed power transmitting condition of the driven-side pulley 100, respectively.

As shown in Figs. 1- 3, the driven-side pulley 100 includes a driven-side fixed sheave 110 supported by the driven shaft 65 in a relatively rotatable manner around the axis line with respect thereto and in an immovable manner along the axis line, a driven-side movable sheave 130 supported by the driven shaft 65 in a relatively rotatable manner around the axis line with respect thereto and in a movable manner along the axis line, a spider 150 supported by the driven shaft 65 in a relatively non-rotatable manner around the axis line with respect thereto and in an immovable manner along the axis line, and a biasing member 170 that presses the driven-side movable sheave 130.

The driven-side fixed sheave 110 has a conical fixed-side belt sandwiching surface 110a.
To explain in detail, the driven-side fixed sheave 110 includes a fixed-side peripheral wall portion 113, a fixed-side connecting portion 111 and a fixed-side flange portion 115. The fixed-side peripheral wall portion 113 surrounds the driven shaft 65 while being positioned away from driven shaft 65 in a radially outward direction so that there is a gap between the driven shaft 65 and the peripheral wall portion 113. The fixed-side connecting portion 111 extends inwardly in the radial direction from an end of the fixed-side peripheral wall portion 113 that is on a side opposite the driven-side movable sheave 130, and is supported through a bearing member 190 by the driven shaft 65 in a relatively rotatable manner around the axis line with respect thereto and in an immovable manner along the axis line. The fixed-side flange portion 115 extends outwardly in the radial direction from an end of the fixed-side peripheral wall portion 113 that is on a side close to the driven-side movable sheave 130.

An outer surface of the fixed-side flange portion 115 that faces the driven-side movable sheave 130 is inclined so as to be away from the driven-side movable sheave 130 as it goes outwardly in the radial direction, the outer surface forming the fixed-side belt sandwiching surface 110a.

In the present embodiment, the fixed-side peripheral wall portion 113, the fixed-side connecting portion 111 and the fixed-side flange portion 115 are integrally formed by a single member.

The driven-side movable sheave 130 has a conical movable-side belt sandwiching surface 130a that sandwiches the belt 40 in cooperation with the conical fixed-side belt sandwiching surface 110a.

To explain in detail, the driven-side movable sheave 130 includes a movable-side peripheral wall portion 133, a movable-side first connecting portion 131 and a movable-side flange portion 135. The movable-side peripheral wall portion 133 is away from the driven shaft 65 in a radially outward direction so that there is a gap between the driven shaft 65 and the movable-side peripheral wall portion 133, and surrounds the driven shaft 65 while being positioned on an inner side of the fixed-side peripheral wall portion 113 in the radial direction. The movable-side first connecting portion 131 extends inwardly in the radial direction from an end of the movable-side peripheral wall portion 133 that is on a side close to the driven-side fixed sheave 110, and is supported through a bearing member 191 by the driven shaft 65 in a relatively rotatable manner around the axis line with respect thereto and in a movable manner along the axis line. The movable-side flange portion 135 extends outwardly in the radial direction from an end of the movable-side peripheral wall portion 113 that is on a side opposite the driven-side fixed sheave 110.

An outer surface of the movable-side flange portion 135 that faces the driven-side fixed sheave 110 (a surface that faces the fixed-side belt sandwiching surface 110a) is inclined so as to be away from the driven-side fixed sheave 110 as it goes outwardly in the radial direction, the outer surface forming the movable-side belt sandwiching surface 130a.

In the present embodiment, in order to enhance a stabilization in supporting the driven-side movable sheave 130, the driven-side movable sheave 130 further includes a movable-side second connecting portion 132 that extends inwardly in the radial direction from an end of the movable-side peripheral wall portion 133 that is on a side opposite the driven-side fixed sheave 110, and is supported through a bearing member 192 by the driven shaft 65 in a relatively rotatable manner around the axis line with respect thereto and in a movable manner along the axis line.

In the present embodiment, movable-side peripheral wall portion 133 and the movable-side first connecting portion 131 are integrally formed by a first movable sheave forming member 141, while the movable-side flange portion 135 and the movable-side second connecting portion 132 are integrally formed by a second movable sheave forming member 142.
The first and second movable sheave forming members 141, 142 are detachably connected with each other by fastening members 143 such as bolts.

The spider 150, with being positioned in the space between the movable-side peripheral wall portion 133 and the driven shaft 65, is supported by the driven shaft 65 in a relatively non-rotatable manner around the axis line with respect thereto and in an immovable manner along the axis line thereof.

To explain in detail, the spider 150 is positioned between the movable-side first connecting portion 131 and the movable-side second connecting portion 132 in the axis line direction of the driven shaft 65, and is supported at an inner end portion by the driven shaft 65 in a relatively non-rotatable manner around the axis line with respect thereto and in an immovable manner along the axis line thereof and extends outwardly in the radial direction from the inner end portion to an outer end portion.

The biasing member 170 is arranged so as to press the driven-side movable sheave 130 in such a downshift direction as that the movable-side belt sandwiching surface 130a come closer to the fixed-side belt sandwiching surface 110a.

Accordingly, when the rotational speed of the driving shaft 55 is lower than a predetermined rotational speed, the driven-side movable sheave 130 come closest to the driven-side fixed sheave 110 by the pressing force of the biasing member 170 so that the driven-side pulley 100 is in a low-speed power transmitting condition in which the effective diameter of the driven-side pulley 100 is large.

On the other hand, as the rotational speed of the driving shaft 55 increases, the effective diameter of the driving-side pulley 20 becomes larger as explained above. In accordance with the movement, the belt 40 is pulled by the driving-side pulley 20 so that the effective diameter of the driven-side pulley 100 becomes smaller and the driven-side movable sheave 130 is then moved toward the upshift direction (the direction in which the driven-side movable sheave 130 comes away from the fixed-side movable sheave 110) against the pressing force of the biasing member 170 (see Fig. 2).

In the present embodiment, the biasing member 170 has one end portion engaged with the movable-side first connecting portion 131 and the other end engaged with the spider 150, as shown in Figs. 2 and 3.

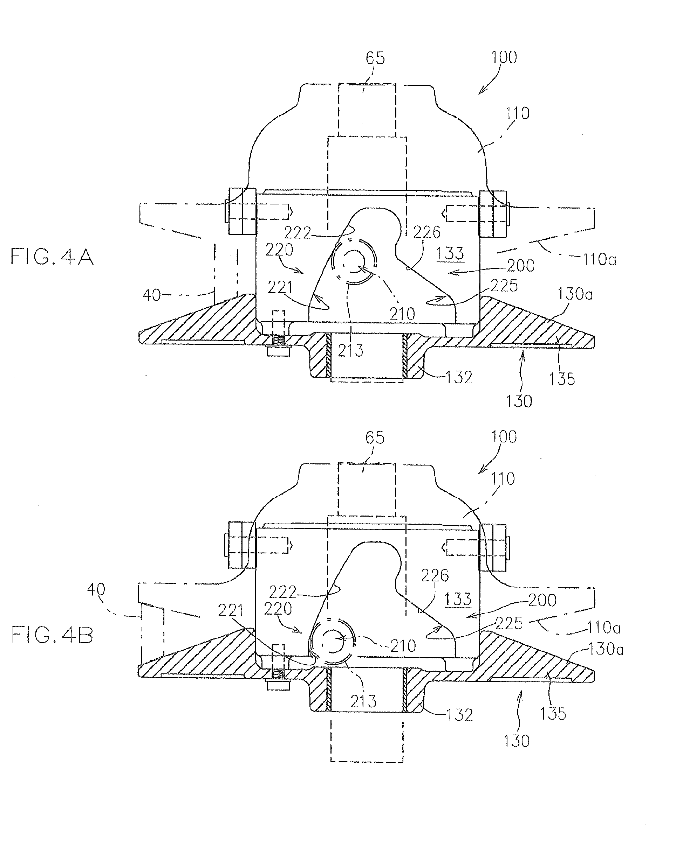

Figs. 4A and 4B are side views of the driven-side pulley 100, viewed along an arrow IV in Figs. 2 and 3. Fig. 4A and 4B show states in which the movable sheave 130 is positioned at a maximum speed position and a minimum speed position, respectively.

As shown in Figs. 1 to 4B, the driven-side pulley 100 according to the present embodiment further includes a main torque-cam mechanism 200 that presses the driven-side movable sheave 130 along the axis line of the driven shaft 65 in accordance with the relative difference in the rotational angle between the spider 150 and the driven-side movable sheave 130.

The main torque-cam mechanism 200 includes a main cam member 210 such as a cam pin provided at the spider 150 and a main cam groove 220 provided at the driven-side movable sheave 130 in such a manner as that the main cam member 210 is engaged into the main cam groove 220.

The main cam member 210 is provided at the spider 150 so as to extend outwardly in the radial direction from the spider 150.
In the present embodiment, the main cam member 210 is detachably connected to the spider 150, as shown in Figs. 2 and 3.

To explain in detail, in the present embodiment, the main cam member 210 includes a proximal end portion 211 inserted into an installation hole formed in the spider 150, and an outwardly-extending portion 212 extending outwardly in the radial direction from the proximal end portion 211.

The proximal end portion 211, with being inserted into the installation hole, is fixed by a fixing pin 211a.
As a matter of course, it is also possible that the main cam member 210 is detachably connected to the spider 150 by a screw connection.

The main cam member 210 further includes a roller member 213 supported by the outwardly-extending portion 212 in a relatively rotatable manner with respect thereto.
The roller member 213 is a member for reducing frictional resistance between the outwardly-extending portion 212 and a cam surface of the main cam groove 220, which is explained later.

As shown in Figs. 2 and 3, the main cam groove 220 is formed at the movable-side peripheral wall portion 133.
To explain in detail, as shown in Figs. 4A and 4B, the main cam groove 220 includes a main driving-side ahead-rotating engagement surface 221 with which the main cam member 210 is engaged at a driving-side ahead-rotating time when the driven-side movable sheave 130 rotates ahead of the spider 150, and a main driven-side ahead-rotating engagement surface 225 with which the main cam member 210 is engaged at a driven-side ahead-rotating time when the spider 150 rotates ahead of the driven-side movable sheave 130.

As shown in Figs. 4A and 4B, the main driving-side ahead-rotating engagement surface 221 and the main driven-side ahead-rotating engagement surface 225 are separated in a circumferential direction from each other by such a distance as that the main cam member 210 is selectively engaged with either one of the both engagement surfaces 221, 225.

As shown in Figs. 4A and 4B, the main driving-side ahead-rotating engagement surface 221 includes a downshift cam region 222 inclined to the axis line direction in such a manner as to engage with the main cam member 210 at the driving-side ahead-rotating time to generate a pressing force for pressing the driven-side movable sheave 130 toward the downshift direction in which the movable sheave 130 comes closer to the driven-side fixed sheave 110.

The configuration makes it possible to cause the belt-type continuously variable transmission 10 to automatically shift down in accordance with an increase of a traveling load, thereby securing a torque for traveling.

That is, in a case where the vehicle is in the high-speed power transmitting condition in which the driven-side movable sheave 130 comes away from the driven-side fixed sheave 110 so that the effective diameter of the driven-side pulley becomes small (see Fig. 4A), when the traveling load that is applied on the driving wheels 60 operatively connected to the driven shaft 65 increases such as when the vehicle comes to a rise in the road, the driven-side movable sheave 130 rotates ahead of the spider 150 so that the main cam member 210 engages with the downshift cam region 222.

If the driven-side movable sheave 130 keeps rotating ahead in a state where the main cam member 210 engages with the downshift cam region 222, the driven-side movable sheave 130 is pressed toward the downshift direction (the direction in which the driven-side movable sheave 130 comes closer to the driven-side fixed sheave 110) by cam function of the main cam member 210 and the cam region 222.

Accordingly, when the traveling load that is applied on the driving wheels 60 increases, the belt-type continuously variable transmission 10 is automatically shifted from the high-speed power transmitting condition (see Fig. 4A) to the low-speed power transmitting condition, that is, the high-torque power transmitting condition (see Fig. 4B).

As shown in Figs. 4A and 4B, the main driven-side ahead-rotating engagement surface 225 includes a downshift cam region 226 inclined to the axis line direction in such a manner as to engage with the main cam member 210 at the driven-side ahead-rotating time when the driven side rotates ahead of the driving side to generate a pressing force for pressing the driven-side movable sheave 130 toward the downshift direction in which the movable sheave 130 comes closer to the driven-side fixed sheave 110.

The configuration makes it possible to secure an enough engine brake function when the driven side rotates ahead.

To explain in detail, for example, when the vehicle travels on a downhill slope without increasing the rotational speed of the power output by the driving power source 50, the driven shaft 65 operatively connected to the driving wheels 60 and the spider 150 rotate ahead of the driven-side movable sheave 130, so that the main cam member 210 engages with the downshift cam region 226.

If the driven side member (the spider 150) keeps rotating ahead in a state where the main cam member 210 engages with the downshift cam region 226, the driven-side movable sheave 130 is pressed toward the downshift direction (see Fig. 4A) by cam function of the main cam member 210 and the cam region 226.

Accordingly, the belt-type continuously variable transmission 10 is automatically shifted from the high-speed power transmitting condition to the low-speed power transmitting condition, so as to realize a sufficient engine brake function.

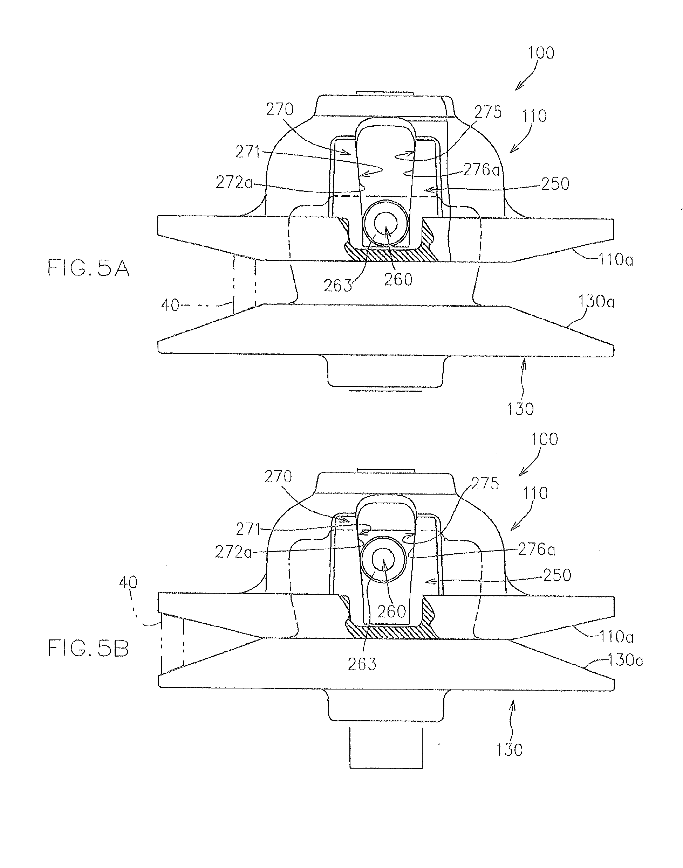

Figs. 5A and 5B are side views of the driven-side pulley 100, viewed along an arrow V in Figs. 2 and 3. Fig. 5A and 5B show states in which the movable sheave 130 is positioned at the maximum speed position and the minimum speed position, respectively.

As shown in Figs. 1 to 3, 5A and 5B, the driven-side pulley 100 according to the present embodiment further includes a sub torque-cam mechanism 250 that presses the driven-side movable sheave 130 along the axis line of the driven shaft 65 in accordance with the relative difference in the rotational angle between the driven-side fixed sheave 110 and the driven-side movable sheave 130.

The sub torque-cam mechanism 250 includes a sub cam member 260 such as a cam pin provided at the driven-side movable sheave 130 and a sub cam groove 270 provided at the driven-side fixed sheave 110 in such a manner as that the sub cam member 260 is engaged into the sub cam groove 270.

The sub cam member 260 is arranged at a portion of the driven-side movable sheave 130 that is surrounded by the driven-side fixed sheave 110, and extends outwardly in the radial direction.

In the present embodiment, as shown in Figs. 2 and 3, the movable-side peripheral wall portion 133 is surrounded by the fixed-side peripheral wall portion 113.
Therefore, the sub cam member 260 is arranged at the movable-side peripheral wall portion 133 so as to extend outwardly in the radial direction from the movable-side peripheral wall portion 133.

In the present embodiment, as shown in Figs. 2 and 3, the sub cam member 260 is detachably connected to the movable-side peripheral wall portion 133.

To explain in detail, the sub cam member 260 includes a proximal end portion 261 inserted into an installation hole formed in the movable-side peripheral wall portion 133, and an outwardly-extending portion 262 extending outwardly in the radial direction of the driven shaft 65 from the proximal end portion 261.

The proximal end portion 261, with being inserted into the installation hole, is fixed by a fixing pin 261a.
As a matter of course, it is also possible that the sub cam member 260 is detachably connected to the movable-side peripheral wall portion 133 by a screw connection.

The sub cam member 260 further includes a roller member 263 supported by the outwardly-extending portion 262 in a relatively rotatable manner with respect thereto.
The roller member 263 is a member for reducing frictional resistance between the outwardly-extending portion 262 and a cam surface of the sub cam groove 270, which is explained later.

As shown in Figs. 2 and 3, the sub cam groove 270 is formed at the fixed-side peripheral wall portion 113 so as to allow the sub cam member 260 to be engaged therein.

As shown in Figs. 5A and 5B, the sub cam groove 270 includes a sub driving-side ahead-rotating engagement surface 271 with which the sub cam member 260 is engaged at a driving-side ahead-rotating time when the driven-side fixed sheave 110 rotates ahead of the driven-side movable sheave 130, and a sub driven-side ahead-rotating engagement surface 275 with which the sub cam member 260 is engaged at a driven-side ahead-rotating time when the driven-side movable sheave 130 rotates ahead of the driven-side fixed sheave 110.

As shown in Figs. 5A and 5B, the sub driving-side ahead-rotating engagement surface 271 and the sub driven-side ahead-rotating engagement surface 275 are separated in a circumferential direction from each other by such a distance as that the sub cam member 270 is selectively engaged with either one of the both engagement surfaces 271, 275.

In the present embodiment, as shown in Figs. 5A and 5B, the sub driving-side ahead-rotating engagement surface 271 includes a downshift cam region 272a inclined to the axis line direction in such a manner as to engage with the sub cam member 260 at the driving-side ahead-rotating time to generate a pressing force for pressing the driven-side movable sheave 130 toward the downshift direction.

According to the configuration, when the driving side rotates ahead of the driven side in accordance with an increase of the traveling load such as when the vehicle comes to a rise in the road, the driven-side movable sheave 130 is moved to toward the downshift direction by the pressing force of the sub torque-cam mechanism 250 in addition to the pressing force of the main torque-cam mechanism 200.

That is, when the traveling load increases so that the driven side delays in a rotational speed and the driving side rotates ahead at the time of the high-speed power transmitting condition shown in Figs. 4 A and 5A, the driven-side movable sheave 130 rotates ahead of the spider 150 so that the driven-side movable sheave 130 is pressed toward the downshift direction by the main torque-cam mechanism 200, as described above.

At this driving-side ahead-rotating time, the driven-side fixed sheave 110 rotates ahead of the driven-side movable sheave 130 connected to the spider 150 through the main torque-cam mechanism 200, so that the sub cam member 260 engages with the downshift cam region 272a.

If the driven-side fixed sheave 110 keeps rotating ahead in a state where the sub cam member 260 engages with the downshift cam region 272a, the driven-side movable sheave 130 is pressed toward the downshift direction by the cam function of the sub cam member 260 and the cam region 272a (see Fig. 5B).

As described above, at the driving-side ahead-rotating time, the driven-side movable sheave 130 is pressed toward the downshift direction by the sub torque-cam mechanism 250 in addition to the main torquf-calm mechanism 200.
This configuration can make a downshift operation quickly and realize stabilization in climbing a slope.

In the present embodiment, as shown in Figs. 5A and 5B, the sub driven-side ahead-rotating engagement surface 275 includes a downshift cam region 276a inclined to the axis line direction in such a manner as to engage with the sub cam member 260 at the driven-side ahead-rotating time to generate a pressing force for pressing the driven-side movable sheave 130 toward the downshift direction.

According to the configuration, the driven-side movable sheave 130 is pressed toward the downshift direction by the sub torque-cam mechanism 250 in addition to the main torque-cam mechanism 200 when the driven-side movable sheave 130 is pressed toward the downshift direction in order to secure the engine brake function, for example, at the time when the vehicle goes down a slope.

Therefore, the configuration can make a downshift operation quickly and realize a quick and strong engine brake function when the vehicle goes down a slope.

Fig. 6 is a plane view of the driven-side pulley 100.

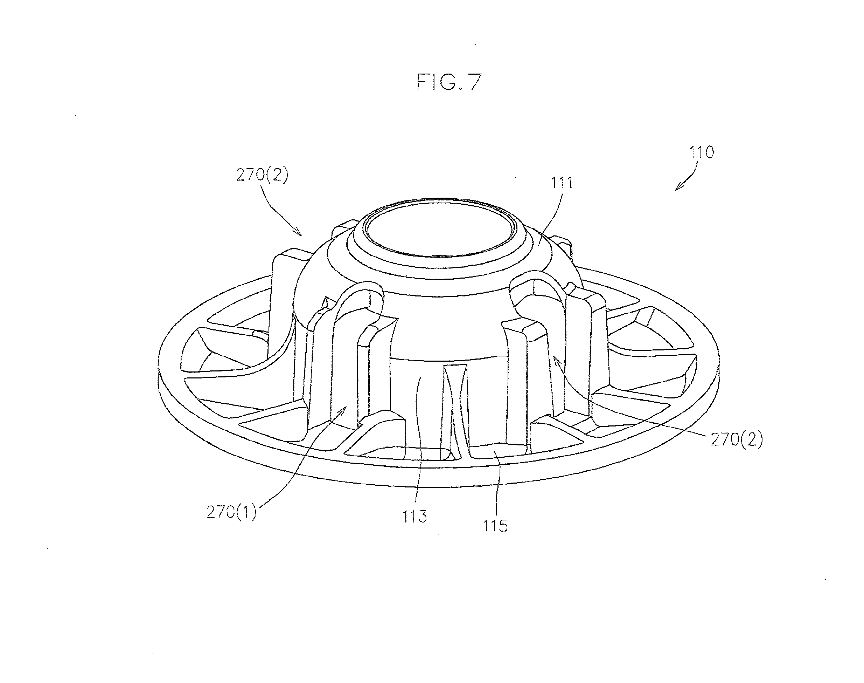

Fig. 7 is a perspective view of the driven-side fixed sheave 110.

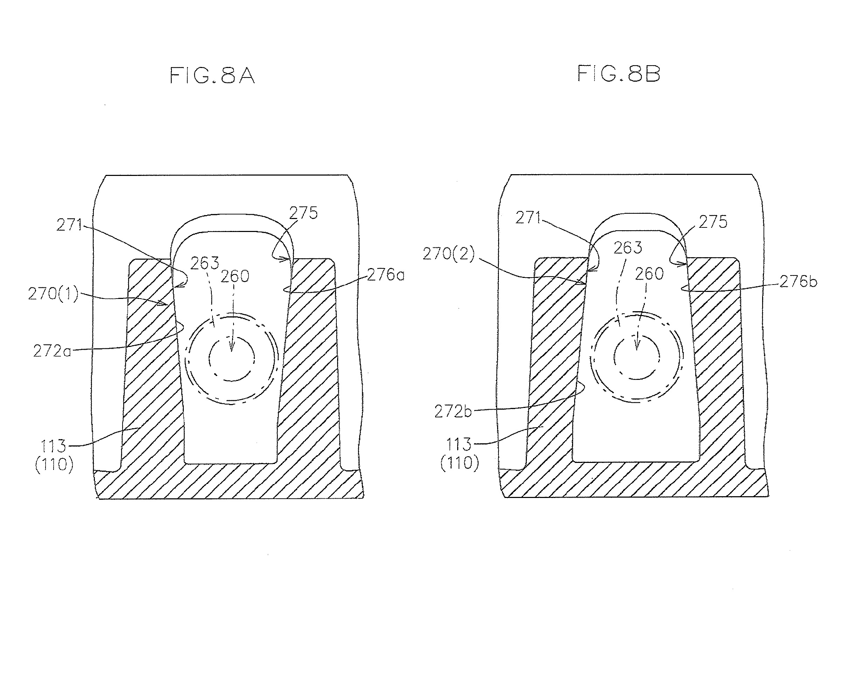

Figs. 8A and 8B are cross sectional views taken along lines VIII(a)-VIII(a) and VIII(b)-VIII(b) in Fig. 6, respectively.

As shown in Figs. 6 to 8A, in the present embodiment, the sub cam groove 270 includes first and second sub cam grooves 270(1), 270(2) that are different from each other in terms of shape and are arranged in a displacement manner in a circumferential direction to each other.

The driven-side fixed sheave 110 can be mounted to the driven shaft 65 at a first mounting position that causes the sub cam member 260 to be inserted into the first sub cam groove 270(1) and also at a second mounting position that causes the sub cam member 260 to be inserted into the second sub cam groove 270(2).

The configuration can easily change a magnitude and a direction of the pressing force with which the sub torque-cam mechanism 250 presses the driven-side movable sheave 130.

In the present embodiment, as shown in Fig. 6, the driven-side fixed sheave 110 is formed with a pair of first sub cam grooves 270(1) and a pair of second cam grooves 270(2).

The pair of first cam grooves 270(1) are displaced from each other in the circumferential direction by 180 degrees.
The pair of second cam grooves 270(2) are displaced from each other in the circumferential direction by 180 degrees, and are also displaced from the pair of first cam grooves 270(1) in the circumferential direction by 90 degrees.

As shown in Fig. 8A, the sub driving-side ahead-rotating engagement surface 271 of the first sub cam groove 270(1) includes a downshift cam region 272a inclined to the axis line direction in such a manner as to generate a pressing force for pressing the driven-side movable sheave 130 toward the downshift direction at the driving-side ahead-rotating time.

The sub driven-side ahead-rotating engagement surface 275 of the first sub cam groove 270(1) includes a downshift cam region 276a inclined to the axis line direction in such a manner as to generate a pressing force for pressing the driven-side movable sheave 130 toward the downshift direction at the driven-side ahead-rotating time.

On the other hand, as shown in Fig. 8B, the sub driving-side ahead-rotating engagement surface 271 of the second sub cam groove 270(2) includes an upshift cam region 272b inclined to the axis line direction in such a manner as to generate a pressing force for pressing the driven-side movable sheave 130 toward the upshift direction at the driving-side ahead-rotating time.

The sub driven-side ahead-rotating engagement surface 275 of the second sub cam groove 270(2) includes an upshift cam region 276b inclined to the axis line direction in such a manner as to generate a pressing force for pressing the driven-side movable sheave 130 toward the upshift direction at the driven-side ahead-rotating time.

The configuration can realize following effects.
When the driven-side fixed sheave 110 is supported by the driven shaft 65 while being arranged at the first mounting position so that the sub cam member 260 is engaged into the first sub cam groove 270(1), the sub torque-cam mechanism 250 generates the pressing force toward the direction same as the direction of the pressing force that the main torque-cam mechanism 200 generates to press the driven-side movable sheave 130.
In this case, the sub torque-cam mechanism 250 functions to assist the main torque-cam mechanism 200.

On the other hand, when the driven-side fixed sheave 110 is supported by the driven shaft 65 while being arranged at the second mounting position so that the sub cam member 260 is engaged into the second sub cam groove 270(2), the sub torque-cam mechanism 250 generates the pressing force toward the direction opposite the direction of the pressing force that the main torque-cam mechanism 200 generates to press the driven-side movable sheave 130.

In this case, the sub torque-cam mechanism 250 functions to counteract the pressing force generated by the main torque-cam mechanism 200.
Accordingly, when the driven-side fixed sheave 110 is arranged at the second mounting position, the movement speed of the driven-side movable sheave 130 toward the downshift direction caused by the main torque-cam mechanism 200 becomes slow.

The magnitude and the direction of the respective pressing forces generated by the main torque-cam mechanism 200 and the sub torque-cam mechanism 250 so as to act on the driven-side movable sheave 130 are defined by inclined angles and inclined direction of the respective cam regions.

In the present embodiment, the cam grooves 270, 270(1), 270(2) are each configured so that the sub driving-side ahead-rotating engagement surface 271 and the sub driven-side ahead-rotating engagement surface 275 generate the pressing forces toward the same direction.

That is, in a case where the sub driving-side ahead-rotating engagement surface 271 includes the downshift cam region 272a, the sub driven-side ahead-rotating engagement surface 275 is also provided with the downshift cam region 276a (see Figs. 5A, 5B and 8A). On the other hand, in a case where the sub driving-side ahead-rotating engagement surface 271 includes the upshift cam region 272b, the sub driven-side ahead-rotating engagement surface 275 is also provided with the upshift cam region 276b (see Fig. 8B).

However, the present invention is not limited to the configuration.
For example, it is possible to form the sub cam groove 270 so that the sub driving-side ahead-rotating engagement surface 271 includes the downshift cam region 272a while the sub driven-side ahead-rotating engagement surface 275 includes the upshift cam region 276b. It is also possible to form the sub cam groove 270 so that the sub driving-side ahead-rotating engagement surface 271 includes the upshift cam region 272b while the sub driven-side ahead-rotating engagement surface 275 includes the downshift cam region 276a.

## Claims

1. A driven-side pulley (100) provided at a driven shaft (65) so as to perform a continuously variable transmission between a driving shaft (55) and the driven shaft (65) in cooperation with a driving-side pulley (20) provided at the driving shaft (55) so that an effective diameter of the driving-side pulley (20) varies in accordance with a rotational speed of the driving shaft (55), the driven-side pulley (100) comprising a fixed sheave (110) that includes a conical fixed-side belt sandwiching surface (110a) and is supported by the driven shaft (65) in a relatively rotatable manner around an axis line with respect thereto and in an immovable manner along the axis line, a movable sheave (130) that includes a conical movable-side belt sandwiching surface (130a) sandwiching a belt (40) in cooperation with the fixed-side belt sandwiching surface (110a) and is supported by the driven shaft (65) in a relatively rotatable manner around the axis line with respect thereto and in a movable manner along the axis line, a spider (150) that is supported by the driven shaft (65) in a relatively non-rotatable manner around the axis line with respect thereto and in an immovable manner along the axis line, and a biasing member (170) that presses the movable sheave (130) in such a direction as that the movable-side belt sandwiching surface (130a) comes closer to the fixed-side belt sandwiching surface (110a), the driven-side pulley (100) being **characterized in that**,
the driven-side pulley (100) further comprises a main torque-cam mechanism (200) and a sub torque-cam mechanism (250),
the main torque-cam mechanism (200) presses the movable sheave (130) in the axis line in accordance with a relative difference in a rotational angle between the spider (150) and the movable sheave (130), and
the sub torque-cam mechanism (250) presses the movable sheave (130) in the axis line in accordance with a relative difference in a rotational angle between the fixed sheave (110) and the movable sheave (130).

2. A driven-side pulley (100) according to claim 1,
wherein the main torque-cam mechanism (200) includes a main cam member (210) provided at the spider (150) and a main cam groove (220) provided at the movable sheave (130) in such a manner as that the main cam member (210) is engaged therein,
wherein the main cam groove (220) includes a main driving-side ahead-rotating engagement surface (221) with which the main cam member (210) is engaged at a driving-side ahead-rotating time when the movable sheave (130) rotates ahead of the spider (150), and a main driven-side ahead-rotating engagement surface (225) with which the main cam member (210) is engaged at a driven-side ahead-rotating time when the spider (150) rotates ahead of the movable sheave (130),
wherein the main driving-side ahead-rotating engagement surface (221) and the main driven-side ahead-rotating engagement surface (225) are separated in a circumferential direction from each other by such a distance as that the main cam member (210) is selectively engaged with either one of the both engagement surfaces (221, 225), and
wherein the main driving-side ahead-rotating engagement surface (221) includes a cam region (222) inclined to the axis line direction in such a manner as to generate a pressing force for pressing the movable sheave (130) toward a downshift direction in which the movable sheave (130) comes closer to the fixed sheave (110) at the driving-side ahead-rotating time.

3. A driven-side pulley (100) according to claim 2,
wherein the sub torque-cam mechanism (250) includes a sub cam member (260) provided at the movable sheave (130) and a sub cam groove (270) provided at the fixed sheave (110) in such a manner as that the sub cam member (260) is engaged therein,
wherein the sub cam groove (270) includes a sub driving-side ahead-rotating engagement surface (271) with which the sub cam member (260) is engaged to generate a pressing force for pressing the movable sheave (130) in the axis line at a driving-side ahead-rotating time when the fixed sheave (110) rotates ahead of the movable sheave (130) that is connected to the spider (150) through the main torque-cam mechanism (200), and a sub driven-side ahead-rotating engagement surface (275) with which the sub cam member (260) is engaged to generate a pressing force for pressing the movable sheave (130) in the axis line at a driven-side ahead-rotating time when the movable sheave (130) rotates ahead of the fixed sheave (110), and
wherein the sub driving-side ahead-rotating engagement surface (271) and the sub driven-side ahead-rotating engagement surface (275) are separated in a circumferential direction from each other by such a distance as that the sub cam member (270) is selectively engaged with either one of the both engagement surfaces (271, 275).

4. A driven-side pulley (100) according to claim 3, wherein the sub driving-side ahead-rotating engagement surface (271) includes a cam region (272a) inclined to the axis line direction in such a manner as to generate a pressing force for pressing the movable sheave (130) toward the downshift direction at the driving-side ahead-rotating time.

5. A driven-side pulley (100) according to claim 3, wherein the sub driving-side ahead-rotating engagement surface (271) includes a cam region (272b) inclined to the axis line direction in such a manner as to generate a pressing force for pressing the movable sheave (130) toward the upshift direction at the driving-side ahead-rotating time.

6. A driven-side pulley (100) according to any one of claims 3 to 5, wherein the sub driven-side ahead-rotating engagement surface (275) includes a cam region (276a) inclined to the axis line direction in such a manner as to generate a pressing force for pressing the movable sheave (130) toward the downshift direction at the driven-side ahead-rotating time.

7. A driven-side pulley (100) according to any one of claims 3 to 5, wherein the sub driven-side ahead-rotating engagement surface (275) includes a cam region (276b) inclined to the axis line direction in such a manner as to generate a pressing force for pressing the movable sheave (130) toward the upshift direction in which the movable sheave (130) comes away from the fixed sheave (110) at the driven-side ahead-rotating time.

8. A driven-side pulley (100) according to any one of claims 3 to 7,
wherein the sub cam groove (270) includes first and second sub cam grooves (270(1), 270(2)) that are different in terms of shape from each other and are arranged in a displacement manner in a circumferential direction to each other, and
wherein the fixed sheave (110) can be mounted to the driven shaft (65) at a first mounting position that causes the sub cam member (260) to be inserted into the first sub cam groove (270(1)) and also at a second mounting position that causes the sub cam member (260) to be inserted into the second sub cam groove (270(2)).
